(19) Europäisches Patentamt
European Patent Office
Office européen des brevets

(11) EP 3 000 837 B1

(12) **EUROPEAN PATENT SPECIFICATION**

(45) Date of publication and mention of the grant of the patent:
**07.06.2017 Bulletin 2017/23**

(51) Int Cl.:
***C08G 69/44*** *(2006.01)* ***C08G 63/685*** *(2006.01)*

(21) Application number: **15163206.4**

(22) Date of filing: **10.04.2015**

(54) **POLYAMIDE ESTER RESIN, METHOD FOR PREPARING THE SAME, AND MOLDED ARTICLE INCLUDING THE SAME**

POLYAMIDESTERHARZ, VERFAHREN ZUR HERSTELLUNG DAVON UND FORMARTIKEL DAMIT

RÉSINE D'ESTER DE POLYAMIDE, SON PROCÉDÉ DE PRÉPARATION ET ARTICLE COMPRENANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2014 KR 20140127057**
**16.12.2014 KR 20140181808**

(43) Date of publication of application:
**30.03.2016 Bulletin 2016/13**

(73) Proprietor: **Lotte Advanced Materials Co., Ltd.**
**Yeosu-si**
**Jeollanam-do (KR)**

(72) Inventors:
- **Im, Sang Kyun**
  **Gyeonggi-do (KR)**
- **Bae, Shin Hyo**
  **Gyeonggi-do (KR)**
- **Kwon, So Young**
  **Gyeonggi-do (KR)**
- **Son, Su Yeong**
  **Gyeonggi-do (KR)**
- **Kim, Joon Sung**
  **Gyeonggi-do (KR)**
- **Kim, Jin Kyu**
  **Gyeonggi-do (KR)**
- **Park, Tae Joon**
  **Gyeonggi-do (KR)**
- **Jin, Young Sub**
  **Gyeonggi-do (KR)**
- **Lee, Ki Yon**
  **Gyeonggi-do (KR)**

(74) Representative: **Michalski Hüttermann & Partner**
**Patentanwälte mbB**
**Speditionstraße 21**
**40221 Düsseldorf (DE)**

(56) References cited:
**JP-A- H01 167 329** **JP-A- H04 306 229**
**JP-A- H05 156 010**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 000 837 B1

## Description

### Field of the Invention

The present invention relates to a polyamide ester resin, a method for preparing the same, and a molded article including the same. More particularly, the present invention relates to a highly heat resistant crystalline polyamide ester resin which exhibits excellent properties in terms of moisture absorption resistance, heat resistance, discoloration resistance and the like by applying a cyclic ester, a method for preparing the same, and a molded article including the same.

### Description of the Related Art

Highly heat resistant nylon can be obtained by polycondensation of an aromatic dicarboxylic acid or an aromatic diamine. The highly heat resistant nylon can have a semi-aromatic structure and a semi-crystalline structure, and can be applied to various fields requiring high heat resistance due to considerably highly heat resistance as compared with general nylon products.

In particular, since the highly heat resistant nylon must be soldered by a lead-free solder at a surface temperature of 260°C without formation of blisters and must have no distortion even after absorption of water in order to be used for electronics, it is necessary for the highly heat resistant nylon to exhibit excellent properties in terms of moisture absorption resistance, heat resistance, moldability and the like.

Highly heat resistant nylon generally used in the art includes PA4T, PA6T, PA9T, PA10T, PA11T, PA12T, and the like. Highly heat resistant nylon using a $C_9$ or longer chain diamine may directly use a homopolymer or may be used in the form of a copolymer using a small amount of a comonomer (dicarboxylic acid or diamine). Generally, in PA4T and PA6T, since a homopolymer cannot be processed due to extremely high melting point thereof, a large amount (dozens%) of the comonomer is introduced to improve melt processability. In PA6T, the comonomer includes adipic acid, isophthalic acid and the like, which are generally used in the art, and may include short-chain and long-chain aliphatic diamines, cyclic aliphatic diamines, branched aliphatic diamines, short-chain and long-chain aliphatic dicarboxylic acids, cyclic aliphatic dicarboxylic acids, branched aliphatic dicarboxylic acids, and the like. In addition, a cyclic aliphatic dicarboxylic acid may be used instead of an aromatic dicarboxylic acid to produce products with excellent optical and thermal properties, and copolymerization of a monomer capable of increasing glass transition temperature (Tg) may be performed to prevent deterioration in properties of nylon products at high temperature. However, such copolymerization cannot prevent discoloration of nylon upon exposure to air at high temperature.

Although a highly heat resistant polyester-based product is also used for products requiring discoloration resistance instead of the highly heat resistant nylon, the highly heat resistant polyester-based product generally exhibits lower heat resistance than the highly heat resistant nylon and has drawbacks, such as poor moisture absorption resistance, moldability and the like under humidification conditions, despite excellent discoloration resistance thereof.

Therefore, there is a need for development of polyamide ester resins (amide-ester hybrid resin) which can exhibit excellent heat resistance, discoloration resistance and the like, as compared with existing highly heat resistant nylon products, and can improve moisture absorption resistance, moldability, and the like, which are drawbacks of polyester products. Polyamide ester resins are inter alia disclosed in the JP H04 306229, JP H05 156010 and JP H01 167329.

### Summary of the Invention

It is an aspect of the present invention to provide a highly heat resistant crystalline polyamide ester resin which exhibits excellent properties in terms of moisture absorption resistance, heat resistance, discoloration resistance and property balance therebetween, a method for preparing the polyamide ester resin, and a molded article formed from the polyamide ester resin.

One aspect of the present invention relates to a polyamide ester resin. The polyamide ester resin includes: a repeat unit derived from a dicarboxylic acid; a repeat unit derived from a diamine; and a repeat unit represented by Formula 1, wherein the polyamide ester resin has a melting temperature (Tm) of 280°C or more.

[Formula 1]

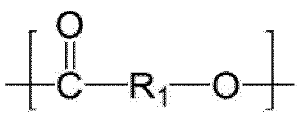

wherein $R_1$ is a $C_3$ to $C_{12}$ linear, branched or cyclic alkylene group.

In one embodiment, the repeat unit represented by Formula 1 may be derived from a cyclic ester compound represented by Formula 2 or a hydroxycarboxylic acid compound represented by Formula 3:

[Formula 2]

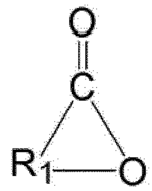

[Formula 3]

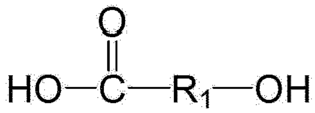

wherein $R_1$ is defined as in Formula 1. The dicarboxylic acid includes 50 mol% or more of a $C_8$ to $C_{20}$ aromatic dicarboxylic acid and 50 mol% or less of a $C_6$ to $C_{20}$ aliphatic dicarboxylic acid.

In one embodiment, the diamine may include at least one $C_4$ to $C_{20}$ aliphatic diamine.

In one embodiment, the repeat unit represented by Formula 1 may be present in an amount of 1 part or more by mole to 30 parts or less by mole based on 100 parts by mole of the repeat unit derived from the dicarboxylic acid and the repeat unit derived from the diamine, and a molar ratio of the repeat unit derived from the dicarboxylic acid to the repeat unit derived from the diamine (dicarboxylic acid/diamine) may range from 0.95 or more to 1.15 or less. The polyamide ester resin has: a crystallization temperature (Tc) of 250°C or more to 290°C or less and/or a glass transition temperature (Tg) of 80°C or more to 120°C or less; and/or an intrinsic viscosity of 0.5 or more dL/g to 2.0 dL/g or less; and/or a water absorption rate of 1.5% or less as measured on a specimen having a size of 100 mm × 100 mm × 3 mm after treatment of the specimen at 50°C and 90% relative humidity (RH) for 48 hours.

In one embodiment, the polyamide ester resin may have a color change (ΔE) of 4 or more to 7 or less as represented by Equation 1:

[Equation 1]

$$\text{Color change } (\Delta E) = \sqrt{(\Delta L*)^2 + (\Delta a*)^2 + (\Delta b*)^2}$$

wherein ΔL* is a difference of L* between before and after a scorch test, Δa* is a difference of a* between before and after the scorch test, and Δb* is a difference of b* between before and after the scorch test.

Another aspect of the present invention relates to a method for preparing the polyamide ester resin as set forth above. The method for preparing the polyamide ester resin includes polymerizing a monomer mixture including a dicarboxylic acid, a diamine, and a cyclic ester compound represented by Formula 2 or a hydroxycarboxylic acid compound represented by Formula 3, wherein the polyamide ester resin has a melting temperature (Tm) of 280°C or more.

In one embodiment, the method may include: preparing a prepolymer by polymerization of the monomer mixture; and performing solid-state polymerization of the prepolymer.

In one embodiment, the solid-state polymerization may be performed by heating the prepolymer to a temperature of 150°C or more to 280°C or less.

A further aspect of the present invention relates to a molded article formed from the polyamide ester resin.

**Detailed description of the Invention**

Hereinafter, embodiments of the present invention will be described in detail.

According to one embodiment of the present invention, a polyamide ester resin includes: (A) a repeat unit derived from a dicarboxylic acid, which comprises 50 mol% or more of a $C_8$ to $C_{20}$ aromatic dicarboxylic acid and a $C_6$ to $C_{20}$ aliphatic dicarboxylic acid, whereby the content of the $C_6$ to $C_{20}$ aliphatic dicarboxylic acid is 50 mol% or less; (B) a repeat unit derived from a diamine; and (C) a repeat unit represented by Formula 1, wherein the polyamide ester

resin has a melting temperature (Tm) of 280°C or more.

[Formula 1]

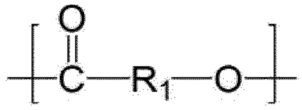

wherein $R_1$ is a $C_3$ to $C_{12}$ linear, branched or cyclic alkylene group, for example, a $C_4$ to $C_{10}$ linear branched or cyclic alkylene group, more preferred a $C_5$ to $C_8$ linear branched or cyclic alkylene group;
wherein the polyamide ester resin has a melting temperature (Tm) of 280 °C or more and wherein the polyamide ester resin has a crystallization temperature (Tc) of 250 °C or more to 290 °C, and/ or a glass transition temperature (Tg) of 80 °C or more to 120 °C, and/or an intrinsic viscosity of 0.5 dL/g or more to 2.0 dL/g, and/or a water absorption rate of 1.5% or less as measured on a specimen having a size of 100 mm x 100 mm x 3 mm after treatment of the specimen at 50 °C and 90% RH for 48 hours. As used herein, terms such as "dicarboxylic acid" and derivatives thereof includes dicarboxylic acids, alkyl esters thereof ($C_1$ to $C_4$ low-order alkyl esters such as monomethyl, monoethyl, dimethyl, diethyl, dibutyl esters, and the like), acid anhydrides thereof and the like, and form a repeat unit derived from a dicarboxylic acid (dicarboxylic acid moiety) through reaction with a diamine and a cyclic ester compound or a hydroxycarboxylic acid compound. In addition, as used herein, the terms such as "dicarboxylic acid moiety", "repeat unit derived from a diamine (diamine moiety)" and "repeat unit represented by Formula 1 (cyclic ester moiety or hydroxycarboxylic acid moiety)" refer to residues which remain after removal of hydrogen atoms of dicarboxylic acids and diamines (removed from amine groups), hydroxyl or alkoxy groups (removed from carboxylic acid groups), and residues which remain after removal of hydrogen atoms of ring-opened cyclic ester moieties or hydroxycarboxylic acid compounds (removed from hydroxyl groups) and hydroxyl or alkoxy groups (removed from carboxylic acid groups) when the dicarboxylic acids, the diamines and the cyclic ester compounds or hydroxycarboxylic acid compounds are polymerized, respectively.

(A) Repeat unit derived from a dicarboxylic acid

According to the embodiment, the repeat unit derived from the dicarboxylic acid is a residue which remains after removal of a hydroxyl or alkoxy group from a carboxylic acid group of the dicarboxylic acid. For example, the repeat unit may be represented by Formula 4:

[Formula 4]

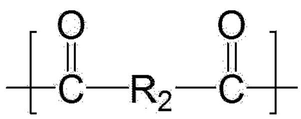

wherein $R_2$ is a remaining portion excluding the carboxylic acid group of the dicarboxylic acid. For example, $R_2$ may be a $C_4$ to $C_{30}$ hydrocarbon group or a $C_4$ to $C_{30}$ hydrocarbon group containing heteroatoms such as oxygen atoms, sulfur atoms and the like, specifically a $C_4$ to $C_{18}$ linear, branched or cyclic alkylene group, a $C_6$ to $C_{18}$ arylene group, a $C_4$ to $C_{18}$ linear, branched or cyclic alkylene group containing heteroatoms, or a $C_6$ to $C_{18}$ arylene group containing heteroatoms, as long as $R_2$ comprises the residue of 50 mol% or more of a $C_8$ to $C_{20}$ aromatic dicarboxylic acid and a $C_6$ to $C_{20}$ aliphatic dicarboxylic acid, whereby the content of the $C_6$ to $C_{20}$ aliphatic dicarboxylic acid is 50 mol% or less. The dicarboxylic acid may be any dicarboxylic acid used for typical polyamide resins, provided that it comprises 50 mol% or more of a $C_8$ to $C_{20}$ aromatic dicarboxylic acid and a $C_6$ to $C_{20}$ aliphatic dicarboxylic acid, whereby the content of the $C_6$ to $C_{20}$ Aliphatic dicarboxylic acid is 50 mol% or less. The aromatic dicarboxylic acid is a compound including at least one $C_8$ to $C_{20}$ aromatic dicarboxylic acid. The aromatic dicarboxylic acid may include terephthalic acid, isophthalic acid, 2,6-naphthalenedicarboxylic acid, 2,7-naphthalenedicarboxylic acid, 1,4-naphthalenedicarboxylic acid, 1,3-phenylenedioxydiacetic acid, diphenic acid, 4,4'-oxybis(benzoic acid), diphenylmethane-4,4'-dicarboxylic acid, diphenylsulfone-4,4'-dicarboxylic acid, 4,4'-diphenyldicarboxylic acid, mixtures thereof, and the like, without being limited thereto. For example, the aromatic dicarboxylic acid may include terephthalic acid, isophthalic acid, and mixtures thereof.
The aromatic dicarboxylic acid is present in an amount of 50 mol% or more, for example, 55 mol% or more to 90 mol% or less, specifically 60 mol% or more to 80 mol% or less in the total dicarboxylic acid.

In some embodiments, the aromatic dicarboxylic acid may be present in an amount of 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 mol%. Further, according to some embodiments of the present invention, the amount of the aromatic dicarboxylic acid can be in a range from any of the foregoing amounts to any other of the foregoing amounts.

Within this range, the polyamide ester resin can exhibit excellent heat resistance, crystallinity and the like.

In addition, the dicarboxylic acid further includes an aliphatic dicarboxylic acid to further improve processability of the polyamide ester resin. The aliphatic dicarboxylic acid is a $C_6$ to $C_{20}$ aliphatic dicarboxylic acid, for example, adipic acid, without being limited thereto. The aliphatic dicarboxylic acid may be optionally present in an amount of 50 mol% or less, for example, 10 mol% or more to 45 mol% or less, specifically 20 mol% or more to 40 mol% or less in the total dicarboxylic acid.

In some embodiments, the aliphatic dicarboxylic acid may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 mol%. Further, according to some embodiments of the present invention, the amount of the aliphatic dicarboxylic acid can be in a range from any of the foregoing amounts to any other of the foregoing amounts.

Within this range, the polyamide ester resin exhibiting further improved processability can be obtained without deterioration in other properties.

(B) Repeat unit derived from diamine

According to the embodiment of the invention, the repeat unit derived from the diamine is a residue which remains after removal of hydrogen atoms from an amine group of the diamine. For example, the repeat unit may be represented by Formula 5:

[Formula 5]

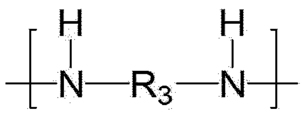

wherein $R_3$ is a remaining portion excluding the amine group of the diamine. For example, $R_3$ may be a $C_4$ to $C_{30}$ hydrocarbon group or a $C_4$ to $C_{30}$ hydrocarbon group containing heteroatoms such as oxygen atoms, sulfur atoms and the like, specifically a $C_4$ to $C_{20}$ linear, branched or cyclic alkylene group, a $C_6$ to $C_{30}$ arylene group, a $C_4$ to $C_{20}$ linear, branched or cyclic alkylene group containing heteroatoms, or a $C_6$ to $C_{30}$ arylene group containing heteroatoms.

In one embodiment, the diamine may be any diamine used for typical polyamide resins without limitation. For example, the diamine may include an aliphatic diamine.

In one embodiment, the aliphatic diamine may include at least one $C_4$ to $C_{20}$ aliphatic diamine. For example, the aliphatic diamine may include 1,4-butanediamine, 1,6-hexanediamine (hexamethylenediamine, HMDA), 1,7-heptanediamine, 1,8-octanediamine, 1,10-decanediamine (DDA), 1,12-dodecanediamine (DDDA), 3-methyl-1,5-pentanediamine, 2,2,4-trimethyl-1,6-hexanediamine, 2,4,4-trimethyl-1,6-hexanediamine, 5-methyl-1,9-nonanediamine, 2,2-oxybis(ethylamine), bis(3-aminopropyl)ether, ethylene glycol bis(3-aminopropyl)ether (EGBA), 1,7-diamino-3,5-dioxoheptane, mixtures thereof, and the like, without being limited thereto.

In one embodiment, the aliphatic diamine may be a mixture of a $C_4$ to $C_{10}$ aliphatic diamine and a $C_{11}$ to $C_{20}$ aliphatic diamine, without being limited thereto. In this case, in the total aliphatic diamine, the $C_4$ to $C_{10}$ aliphatic diamine may be present in an amount of 1 mol% or more to 99 mol% or less, for example, 50 mol% or more to 95 mol% or less, specifically 85 mol% or more to 90 mol% or less, and the $C_{11}$ to $C_{20}$ aliphatic diamine may be present in an amount of 1 mol% or more to 99 mol% or less, for example, 5 mol% or more to 50 mol% or less, specifically 10 mol% or more to 15 mol% or less.

In some embodiments, the mixture of the $C_4$ to $C_{10}$ aliphatic diamine and the $C_{11}$ to $C_{20}$ aliphatic diamine may include the $C_4$ to $C_{10}$ aliphatic diamine in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 mol%. Further, according to some embodiments of the present invention, the amount of the $C_4$ to $C_{10}$ aliphatic diamine can be in a range from about any of the foregoing amounts to about any other of the foregoing amounts.

In some embodiments, the mixture of the $C_4$ to $C_{10}$ aliphatic diamine and the $C_{11}$ to $C_{20}$ aliphatic diamine may

include the $C_{11}$ to $C_{20}$ aliphatic diamine in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 mol%. Further, according to some embodiments of the present invention, the amount of the $C_{11}$ to $C_{20}$ aliphatic diamine can be in a range from about any of the foregoing amounts to about any other of the foregoing amounts.

Within this range, the polyamide ester resin can exhibit improved properties in terms of heat resistance, high-temperature discoloration resistance, and the like.

The aliphatic diamine may be present in an amount of 70 mol% or more to 100 mol% or less, for example, 80 mol% or more to 99 mol% or less in the total diamine.

In some embodiments, the aliphatic diamine may be present in an amount of 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 mol%. Further, according to some embodiments of the present invention, the amount of the aliphatic diamine can be in a range from about any of the foregoing amounts to about any other of the foregoing amounts.

Within this range, the polyamide ester resin can exhibit excellent properties in terms of melt processability, dimensional stability, heat resistance such as glass transition temperature, and the like.

In addition, according to the present invention, the diamine may further include an aromatic diamine to improve heat resistance, crystallinity and the like of the polyamide ester resin.

The aromatic diamine may include at least one $C_6$ to $C_{30}$ aromatic diamine. For example, the aromatic diamine may include phenylenediamine compounds such as m-phenylenediamine and p-phenylenediamine, xylenediamine compounds such as m-xylenediamine and p-xylenediamine, and naphthalenediamine compounds, without being limited thereto.

In the polyamide ester resin according to the embodiment of the invention, a molar ratio of the (A) repeat unit derived from the dicarboxylic acid to the (B) repeat unit derived from the diamine, that is, a molar ratio of the dicarboxylic acid to the diamine used in reaction ((A) dicarboxylic acid/(B) diamine) may range, for example, from 0.95 or more to 1.15 or less, specifically from 1.0 or more to 1.1 or less. Within this range, the polyamide ester resin can prevent deterioration in properties due to unreacted monomers, and a polymer having a melt processable molecular weight can be obtained.

(C) Repeat unit represented by Formula 1

According to the present invention, the repeat unit represented by Formula 1 is a residue which remains after removal of hydrogen atoms from a hydroxyl group of a ring-opened cyclic ester compound moiety or hydroxycarboxylic acid compound and removal of a hydroxyl or alkoxy group from a carboxylic acid group.

In one embodiment, the cyclic ester compound is ring-opening-polymerized in the polyamide ester resin, and can improve moisture absorption resistance, heat resistance and discoloration resistance of the polyamide ester resin. The cyclic ester may be any lactone-form compound without limitation. For example, the cyclic ester compound may be represented by Formula 2:

[Formula 2]

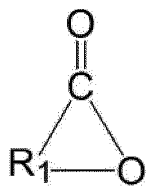

wherein $R_1$ may be a $C_3$ to $C_{12}$ linear, branched or cyclic alkylene group, for example, a $C_4$ to $C_{10}$ linear alkylene group, more preferred a $C_5$ to $C_8$ linear alkylene group

For example, the cyclic ester may include δ-valerolactone, ε-caprolactone, enantholactone, 4-methyl caprolactone, 2,2,4-trimethyl caprolactone, 3,3,5-trimethyl caprolactone, and the like, without being limited thereto.

In one embodiment, the hydroxycarboxylic acid compound is condensation-polymerized in the polyamide ester resin, and can improve moisture absorption resistance, heat resistance and discoloration resistance of the polyamide ester resin. The hydroxycarboxylic acid compound may be any typical hydroxycarboxylic acid compound without limitation. For example, the hydroxycarboxylic acid compound may be represented by Formula 3:

[Formula 3]

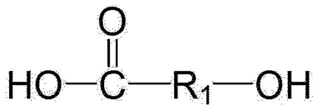

wherein $R_1$ may be a $C_3$ to $C_{12}$ linear, branched or cyclic alkylene group, for example, a $C_4$ to $C_{10}$ linear alkylene group more preferred a $C_5$ to $\mathbf{C_8}$ linear alkylene group

For example, the hydroxycarboxylic acid compound may include 5-hydroxypentanoic acid, and 6-hydroxyhexanoic acid, without being limited thereto.

When the polyamide ester resin is prepared through a general method of polymerizing highly heat resistant nylon ($H_2O$, high-pressure reaction) using diols as a monomer instead of the cyclic ester compound or hydroxycarboxylic acid compound, the diols forming an ester bond with the dicarboxylic acid can come out of the resin again by hydrolysis of the ester bond during reaction. In addition, since the diols can come out in conjunction with a solvent in a solvent removal process, it is extremely difficult to adjust a reaction equivalent weight of the diols.

On the other hand, the cyclic ester compound according to the present invention forms carboxyl group (-COOH) and hydroxyl group (-OH) ends, or forms a hydroxyl group end and an amide bond with the diamine upon ring opening by water ($H_2O$) or the diamine. In addition, the carboxyl group end forms an amide bond by reaction with the diamine. As a result, one side of the cyclic ester compound and the hydroxycarboxylic acid compound forms an amide bond, and the other side thereof forms an ester bond of the hydroxyl group and the dicarboxylic acid. That is, since the cyclic ester compound and the hydroxycarboxylic acid compound are not volatilized in the form of a monomer upon solvent removal even though the ester bond is hydrolyzed by the amide bond after formation of the resin, and the hydroxyl group end and the carboxyl group end form an ester bond again upon high-pressure reaction (solid-state reaction), an ester bond can be effectively introduced into highly heat resistant nylon. Through introduction of the ester bond, the polyamide ester resin exhibiting excellent properties in terms of moisture absorption resistance, heat resistance, discoloration resistance and the like can be obtained.

In the polyamide ester resin according to the invention, the repeat unit represented by Formula 1 (cyclic ester compound or hydroxycarboxylic acid compound) may be present in an amount of 1 part or more by mole to 30 parts or less by mole, for example, 5 parts by mole or more to 20 parts or less by mole, based on 100 parts by mole of the repeat unit derived from the dicarboxylic acid and the repeat unit derived from the diamine.

In some embodiments, the repeat unit represented by Formula 1 may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 parts by mole. Further, according to some embodiments of the present invention, the amount of the repeat unit represented by Formula 1 can be in a range from about any of the foregoing amounts to about any other of the foregoing amounts.

Within this range, the polyamide ester resin can exhibit excellent properties in terms of moisture absorption resistance, heat resistance, discoloration resistance, and the like.

According to the present invention, the polyamide ester resin may have an end group encapsulated with an end capping agent including at least one of an aliphatic carboxylic acid and an aromatic carboxylic acid. The end capping agent may include, for example, acetic acid, propionic acid, butyric acid, valeric acid, caproic acid, caprylic acid, lauric acid, tridecanoic acid, myristic acid, palmitic acid, stearic acid, pivalic acid, isobutyric acid, benzoic acid, toluic acid, α-naphthalenecarboxylic acid, β-naphthalenecarboxylic acid, methylnaphthalenecarboxylic acid, mixtures thereof, and the like, without being limited thereto.

The end capping agent may be present in an amount of 0.01 parts or more by mole to 5 parts or less by mole, for example, 0.1 parts or more by mole to 3 parts or less by mole, based on 100 parts by mole of the dicarboxylic acid and the diamine, without being limited thereto.

According to the present invention, the polyamide ester resin may be prepared by a typical method of preparing a polyamide. For example, the polyamide ester resin may be prepared by polymerization of a monomer mixture including the dicarboxylic acid, the diamine, and the cyclic ester compound or hydroxycarboxylic acid compound.

Polymerization may be performed by a typical polymerization method, for example, melt polymerization. In addition, a polymerization temperature may range from 80°C or more to 300°C or less, for example, from 90°C or more to 280°C or less, and a polymerization pressure may range from 10 $kgf/cm^2$ or more to 40 $kgf/cm^2$ or less, without being limited thereto.

In one embodiment, the polyamide ester resin may be prepared by preparing a prepolymer through polymerization of the monomer mixture, followed by solid-state polymerization of the prepolymer. For example, the monomer mixture, a catalyst and water are placed in a reactor, followed by stirring at 80°C or more to 150°C or less for 0.5 hours or more to 2 hours, and then maintained at 200°C or more to 280°C or less and a pressure of 20 $kgf/cm^2$ or more to 40 $kgf/cm^2$ or less for 1 hour to 4 hours. Next, with the pressure reduced to 10 $kgf/cm^2$ or more to 30 $kgf/cm^2$ or less,

(copolymerization) reaction is performed for 1 hour or more to 3 hours or less, thereby obtaining a prepolymer. Next, the prepolymer is subjected to solid-state polymerization (SSP) at a temperature between a glass transition temperature (Tg) and a melting temperature (Tm) in a vacuum for 5 hours or more to 30 hours, thereby obtaining the polyamide ester resin.

The prepolymer may have an intrinsic viscosity [η] of 0.1 dL/g or more to 1.0 dL/g or less, for example, 0.2 dL/g or more to 0.5 dL/g or less, as measured at 25°C using an Ubbelohde viscometer after the prepolymer is dissolved to a concentration of 0.5 g/dL in a concentrated sulfuric acid solution (98%). Within this range, the polyamide ester resin can exhibit excellent melt processability.

In one embodiment, solid-state polymerization may be performed by heating the prepolymer to a temperature of 150°C or more to 280°C or less, for example, 180°C or more to 250°C or less in a vacuum or in the presence of an inert gas such as nitrogen, argon and the like. Within this range, the polyamide ester resin having a weight average molecular weight of 5,000 g/mol or more to 50,000 g/mol or less can be obtained.

The catalyst may be used in copolymerization. The catalyst may include a phosphorus catalyst, for example, phosphoric acid, phosphorous acid, hypophosphorous acid, salts or derivatives thereof, and the like. As a more specific example, the catalyst may include phosphoric acid, phosphorous acid, hypophosphorous acid, sodium hypophosphate, sodium hypophosphinate, and the like.

For example, the catalyst may be present in an amount of 3 parts by weight or less, for example, 0.001 parts or more by weight to 1 part by weight or less, specifically 0.01 parts or more by weight to 0.5 parts by weight or less, based on 100 parts by weight of the total monomer mixture, without being limited thereto.

In addition, the end capping agent may be present in an amount as set forth above in the method for preparing the polyamide ester resin, and viscosity of the prepared polyamide ester resin may be adjusted through adjustment of the amount of the end capping agent. The polyamide ester resin has a melting temperature (Tm) of 280°C or more, for example, 280°C to 330°C or less. If the melting temperature is less than 280°C, the polyamide ester resin can suffer from deterioration in heat resistance, discoloration resistance and the like, and can be unsuitable as a highly heat resistant resin.

The polyamide ester resin may have a crystallization temperature (Tc) of 250°C or more to 290°C or less, for example, 255°C or more to 280°C or less. Within this range, the polyamide ester resin exhibiting excellent crystallinity can be obtained.

The polyamide ester resin may have a glass transition temperature (Tg) of 80°C or more to 120°C or less, for example, 85°C or more to 110°C or less. Within this range, the polyamide ester resin can exhibit excellent properties in terms of heat resistance, thermal discoloration resistance, fluidity, and the like.

Discoloration resistance of the polyamide ester resin is evaluated in the following method. First, a color (L*, a*, b*) of the prepared polyamide ester resin is measured in accordance with ASTM D1209, followed by a scorch test in which a specimen of the polyamide ester resin having a size of 100 mm × 100 mm × 3 mm is prepared and left in a gear oven at 170°C for 1 hour. Next, color is measured again in the same manner, followed by evaluating discoloration resistance of the polyamide ester resin through calculation of the color change (ΔE) as represented by Equation 1:

[Equation 1]

$$\text{Color change } (\Delta E) = \sqrt{(\Delta L*)^2 + (\Delta a*)^2 + (\Delta b*)^2}$$

wherein ΔL* is a difference of L* between before and after the scorch test, Δa* is a difference of a* between before and after the scorch test, and Δb* is a difference of b* between before and after the scorch test.

The polyamide ester resin may have a color change (ΔE) of 4 or more to 7, for example, 4.5 or more to 6 or less. Within this range, the polyamide ester resin exhibiting excellent discoloration resistance can be obtained.

The polyamide ester resin may have a water absorption rate (moisture absorption rate) of 1.5% or less, for example, 0.1% or more to 1.0% or less, specifically 0.5% or more to 1.0% or less, as measured on a specimen having a size of 100 mm × 100 mm × 3 mm after treatment of the specimen at 50°C and 90% RH for 48 hours. Within this range, the polyamide ester resin exhibits excellent moisture absorption resistance and thus can be prevented from suffering from blisters and the like in a surface mounting (SMT) process when applied to electronics.

More specifically, first, a specimen having a size of 100 mm × 100 mm × 3 mm is prepared and subjected to vacuum drying at 130°C for 4 hours, followed by measurement of a weight of the dried specimen ($W_0$). Next, the dried specimen is treated in a thermohygrostat at 50°C and 90% RH for 48 hours, followed by measurement of a weight of the specimen ($W_1$), thereby calculating the water absorption rate using Equation 2:

[Equation 2]

$$\text{Water absorption rate (\%)} = |W_1-W_0| / W_0 * 100$$

In addition, the polyamide ester resin may have an intrinsic viscosity [η] of 0.1 dL/g or more to 2.0 dL/g or less, for example, 0.5 dL/g or more to 1.5 dL/g or less, as measured at 25°C using an Ubbelohde viscometer after the polyamide ester resin is dissolved to a concentration of 0.5 g/dL in a concentrated sulfuric acid solution (98%). Within this range, the polyamide ester resin can exhibit excellent moldability.

The polyamide ester resin may have a weight average molecular weight of 5,000 g/mol or more to 50,000 g/mol or less, as measured by gel permeation chromatography (GPC), without being limited thereto.

According to the present invention, a molded article is formed from the polyamide ester resin as set forth above. For example, the molded article of the polyamide ester resin may be used as materials for electronics, without being limited thereto. The molded article can be easily formed by those skilled in the art.

Hereinafter, the present invention will be described in more detail with reference to some examples. It should be understood that these examples are provided for illustration only and are not to be construed in any way as limiting the present invention.

## EXAMPLES

### Examples 1 to 4 and Comparative Examples 1 to 4

According to a composition as listed in Table 1, a monomer mixture, which included terephthalic acid (TPA) and adipic acid (AA) as a dicarboxylic acid (diacid), hexamethylenediamine (HMDA) as a diamine, and ε-caprolactone as a cyclic ester compound, 1.49 parts by mole of benzoic acid as an end capping agent based on 100 parts by mole of the dicarboxylic acid and the diamine, 0.1 parts by weight of sodium hypophosphite as a catalyst and 74 parts by weight of water based on 100 parts by weight of the monomer mixture were placed in a 1 liter autoclave, which in turn was filled with nitrogen. The components were stirred at 100°C for 60 minutes, heated to 250°C for 2 hours, and subjected to reaction for 3 hours under a load of 25 $kgf/cm^2$. Next, with the autoclave decompressed to 15 $kgf/cm^2$, reaction was performed for 1 hour. Next, the resulting material was subjected to flash to separate water and a polyamide pre-copolymer from each other. The separated pre-copolymer (intrinsic viscosity [η]=0.2 dL/g) was placed in a tumbler-shaped reactor, followed by solid-state polymerization up to 230°C for 24 hours. Next, the reactor was slowly cooled to room temperature, thereby obtaining a polyamide ester resin.

**Table 1**

| Monomer | | Example | | | | Comparative Example | | | |
|---|---|---|---|---|---|---|---|---|---|
| | | 1 | 2 | 3 | 4 | 1 | 2 | 3 | 4 |
| Diacid | TPA (mol%) | 57.9 | 60.5 | 66.7 | 72.2 | 55 | 57.5 | 60 | 65 |
| | AA (mol%) | 42.1 | 39.5 | 33.3 | 27.8 | 45 | 42.5 | 40 | 35 |
| Diamine | HMDA (mol%) | 100 | 100 | 100 | 100 | 100 | 100 | 100 | 100 |
| Cyclic ester | ε-caprolactone | 5.3 | 5.3 | 5.3 | 11.1 | - | - | - | - |
| Molar ratio | [Diamine]/ [Diacid] | 1.015 | | | | | | | |
| *Unit for amount of cyclic ester compound: parts by mole based on 100 parts by mole of dicarboxylic acid (diacid) and diamine | | | | | | | | | |

### Experimental Example

Each of the polyamide ester resins prepared in Examples and Comparative Examples was evaluated as to melting temperature, crystallization temperature, glass transition temperature, intrinsic viscosity, fluidity, moisture absorption rate, gas generation amount, and discoloration resistance using the following methods. Results are shown in Table 2. Here, in order to form specimens for evaluation of intrinsic viscosity, fluidity, moisture absorption rate, gas generation amount and discoloration resistance, glass fibers may be used in an amount of 30 parts by weight based on 100 parts by weight of the resin.

**Property Evaluation**

(1) Melting temperature, Crystallization temperature and Glass transition temperature (unit: °C): Melting temperature, crystallization temperature and glass transition temperature of each of the polyamide ester resins prepared in Examples and Comparative Examples were measured using a differential scanning calorimeter (DSC). The DSC was a Q20 measuring apparatus (TA Co., Ltd.). In addition, crystallization temperature was measured from an exothermic peak obtained in the course of cooling 5 mg to 10 mg of a specimen at a rate of 10°C/min after the specimen was subjected to vacuum drying at 80°C for 4 hours (3,000 ppm or less of moisture), heated from 30°C to 400°C at a rate of 10°C/min in a nitrogen atmosphere, and maintained at 400°C for 1 minute. Further, after measurement of the crystallization temperature, the specimen was left at 30°C for 1 minute and measured as to glass transition temperature and melting temperature from transition temperature and a maximum point of an endothermic peak obtained in the course of heating the specimen to 400°C at a rate of 10°C/min (2nd scan), respectively.

(2) Intrinsic viscosity (unit: dL/g): The prepared polyamide ester resin was dissolved to a concentration of 0.5 g/dl in a concentrated sulfuric acid solution (98%), followed by measurement of intrinsic viscosity at 25°C using an Ubbelohde viscometer.

(3) Melt index (MI, unit: g/10min): Melt index was measured at 330°C under a load of 2.16 kgf in accordance with ASTM D1238.

(4) Moisture absorption rate (water absorption rate, unit: %): A specimen having a size of 100 mm × 100 mm × 3 mm was prepared and subjected to vacuum drying at 120°C for 4 hours. A weight of the dried specimen ($W_0$) was measured. Next, the dried specimen was treated in a thermohygrostat at 50°C and 90% RH, followed by measurement of a weight of the specimen ($W_1$). The water absorption rate was calculated by Equation 2.

[Equation 2]

$$\text{Water absorption rate (\%)} = |W_1 - W_0| / W_0 * 100$$

(5) Gas generation amount (unit: % by weight (wt%)): Gas generation amount was measured by measuring isothermal TGA using TGA Q500 (TA instruments Inc.). Specifically, 20 mg of the resin was placed on a sample pan, heated to 120°C at a rate of 10 °C/min, and then maintained for 30 minutes to dry water in the resin. Next, the resin was heated to 350°C at a rate of 10 °C/min and the amount of decomposition gas (based upon reduction in weight of the resin) was measured while the temperature was maintained for 30 minutes.

(6) Discoloration resistance: Discoloration resistance was evaluated based on a color change (ΔE) between before and after a scorch test. A color (L*, a*, b*) of the prepared polyamide ester resin was measured using a colorimeter (model: CM-2600d, KONICA MINOLTA Co., Ltd.) in accordance with ASTM D1209, followed by the scorch test in which a specimen of the polyamide ester resin having a size of 100 mm×100 mmx3 mm was prepared and left in a gear oven at 170°C for 1 hour. Next, color was measured again in the same manner, followed by evaluating discoloration resistance of the polyamide ester resin through calculation of the color change (ΔE), as represented by Equation 1:

[Equation 1]

$$\text{Color change } (\Delta E) = \sqrt{(\Delta L*)^2 + (\Delta a*)^2 + (\Delta b*)^2}$$

wherein ΔL* is a difference of L* between before and after the scorch test, Δa* is a difference of a* between before and after the scorch test, and Δb* is a difference of b* between before and after the scorch test.

(7) Discoloration resistance: Discoloration resistance was evaluated through a yellow index change (ΔYI) between before and after a scorch test. A yellow index (YI) of a specimen of the prepared polyamide ester resin having a size of 100 mm×100 mm×3 mm was measured using a colorimeter (model: CM-2600d, KONICA MINOLTA Co., Ltd.) in accordance with ASTM E313-73, followed by a scorch test in which the specimen was left in a gear oven at 170°C for 1 hour. Next, a yellow index (YI) of the specimen was measured again in the same manner, followed by evaluating discoloration resistance of the polyamide ester resin through calculation of the yellow index change (ΔYI), as represented by Equation 3:

[Equation 3]

$$\text{Yellow index change } (\Delta YI) = YI_0 - YI_1$$

wherein $YI_0$ is a yellow index of the specimen before the scorch test and $YI_1$ is a yellow index of the specimen after the scorch test.

**Table 2**

| | Example | | | | Comparative Example | | | |
|---|---|---|---|---|---|---|---|---|
| | 1 | 2 | 3 | 4 | 1 | 2 | 3 | 4 |
| Melting temperature (°C) | 290 | 298 | 306 | 312 | 325 | 321 | 314 | 300 |
| Crystallization temperature (°C) | 257 | 260 | 264 | 272 | 295 | 288 | 278 | 265 |
| Glass transition temperature (°C) | 84 | 90 | 93 | 86 | 100 | 96 | 95 | 91 |
| Intrinsic viscosity (dL/g) | 0.84 | 0.79 | 0.91 | 0.89 | 0.85 | 0.90 | 0.78 | 0.95 |
| MI (g/10min) | 42.1 | 39.4 | 40.7 | 41.9 | 29.1 | 28 | 24 | 18 |
| Moisture absorption rate (%) | 0.98 | 0.88 | 0.93 | 0.83 | 0.95 | 1.03 | 1.12 | 0.99 |
| Gas generation amount (wt%) | 5.1 | 4.3 | 3.5 | 3.1 | 4.4 | 4.9 | 5.0 | 5.5 |
| Initial lightness (L*) | 84.3 | 83.3 | 83.7 | 85.7 | 75.6 | 78.2 | 76.5 | 78.5 |
| Lightness after scorch (L*) | 81.9 | 81.0 | 81.5 | 83.4 | 72.1 | 74.8 | 73.6 | 74.7 |
| Color change (ΔE) | 4.9 | 5.5 | 5.2 | 4.3 | 8.3 | 7.5 | 8.1 | 7.3 |
| Yellow index change (ΔYI) | 8.7 | 7.9 | 8.1 | 6.8 | 12.7 | 11.3 | 10.7 | 10.8 |

From the results in Table 2, it can be seen that the polyamide ester resins according to the present invention (Examples 1 to 4) were highly heat resistant crystalline polyamide ester resins having a melting temperature of 280°C or more and a crystallization temperature of 250°C to 290°C and exhibited excellent properties in terms of fluidity, discoloration resistance, moisture absorption resistance, heat resistance and the like.

On the other hand, it can be seen that, although the polyamide ester resins of Comparative Examples, to which the cyclic ester compound was not applied, exhibited heat resistance and crystallinity, the polyamide ester resins of Comparative Examples exhibited significantly deteriorated properties in terms of fluidity, moisture absorption resistance, discoloration resistance and the like.

## Claims

**1.** A polyamide ester resin comprising:

a repeat unit derived from a dicarboxylic acid, which comprises 50 mol% or more of a $C_8$ to $C_{20}$ aromatic dicarboxylic acid and a $C_6$ to $C_{20}$ aliphatic dicarboxylic acid, whereby the content of the $C_6$ to $C_{20}$ aliphatic dicarboxylic acid is 50 mol% or less;
a repeat unit derived from a diamine; and
a repeat unit represented by Formula 1,

[Formula 1]

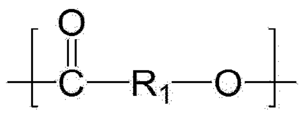

wherein $R_1$ is a $C_3$ to $C_{12}$ linear, branched or cyclic alkylene group; wherein the polyamide ester resin has a melting temperature (Tm) of 280°C or more and wherein the polyamide ester resin has a crystallization temperature (Tc) of 250°C or more to 290°C, and/or a glass transition temperature (Tg) of 80°C or more to 120°C, and/or an intrinsic viscosity of 0.5 dL/g or more to 2.0 dL/g, and/or a water absorption rate of 1.5% or less as measured on a specimen having a size of 100 mm × 100 mm × 3 mm after treatment of the specimen at 50°C and 90% RH for 48 hours.

**2.** The polyamide ester resin according to claim 1, wherein the repeat unit represented by Formula 1 is derived from a cyclic ester compound represented by Formula 2 or a hydroxycarboxylic acid compound represented by Formula 3:

[Formula 2]

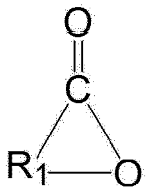

[Formula 3]

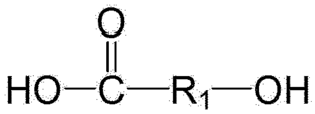

wherein $R_1$ is defined as in Formula 1.

**3.** The polyamide ester resin according to any of the preceding claims, wherein the diamine comprises at least one $C_4$ to $C_{20}$ aliphatic diamine.

**4.** The polyamide ester resin according to any of the preceding claims, wherein the repeat unit represented by Formula 1 is present in an amount of 1 part or more by mole to 30 parts by mole based on 100 parts by mole of the repeat unit derived from the dicarboxylic acid and the repeat unit derived from the diamine, and a molar ratio of the repeat unit derived from the dicarboxylic acid to the repeat unit derived from the diamine (dicarboxylic acid/diamine) ranges from 0.95 or more to 1.15.

**5.** The polyamide ester resin according to any of the preceding claims, wherein the polyamide ester resin has a color change ($\Delta$E) of 4 or more to 7, as represented by Equation 1:

[Equation 1]

$$\text{Color change } (\Delta E) = \sqrt{(\Delta L*)^2 + (\Delta a*)^2 + (\Delta b*)^2}$$

wherein $\Delta L^*$ is a difference of L* between before and after a scorch test, $\Delta a^*$ is a difference of a* between before and after the scorch test, and $\Delta b^*$ is a difference of b* between before and after the scorch test.

**6.** A method for preparing a polyamide ester resin, comprising:

polymerizing a monomer mixture comprising a dicarboxylic acid, a diamine, and a cyclic ester compound represented by Formula 2 or a hydroxycarboxylic acid compound represented by Formula 3,
wherein the polyamide ester resin has a melting temperature (Tm) of 280°C or more.

[Formula 2]

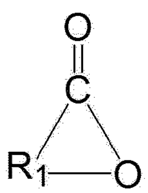

[Formula 3]

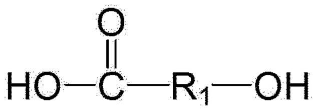

wherein $R_1$ is a $C_3$ to $C_{12}$ linear, branched or cyclic alkylene group.

7. The method according to claim 6, comprising:

preparing a prepolymer by polymerization of the monomer mixture; and
performing solid-state polymerization of the prepolymer.

8. The method according to claim 6 or 7, wherein the solid-state polymerization is performed by heating the prepolymer to a temperature of 150°C or more to 280°C.

9. A molded article formed from the polyamide ester resin according to any one of claims 1 to 5.

**Patentansprüche**

1. Polyamidesterharz mit:

einer Wiederholungseinheit, die von Dicarbonsäure abgeleitet ist und die 50 mol-% oder mehr einer aromatischen $C_8$- bis $C_{20}$-Dicarbonsäure und einer aliphatischen $C_6$- bis $C_{20}$-Dicarbonsäure aufweist, wobei der Anteil der aliphatischen $C_6$- bis $C_{20}$-Dicarbonsäure 50 mol-% oder weniger beträgt;
einer von einem Diamin abgeleiteten Wiederholungseinheit; und
einer durch Formel 1 dargestellten Wiederholungseinheit:

[Formel 1]

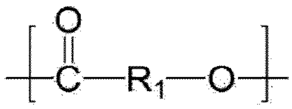

wobei $R_1$ eine lineare, verzweigte oder zyklische $C_3$- bis $C_{12}$-Alkylengruppe ist;
wobei das Polyamidesterharz eine Schmelztemperatur (Tm) von 280°C oder mehr hat, und wobei das Polyamidesterharz eine Kristallisationstemperatur (Tc) von 250°C oder mehr bis 290°C und/oder eine Glasübergangstemperatur (Tg) von 80°C oder mehr bis 120°C und/oder eine intrinsische Viskosität von 0,5 dl/g oder mehr bis 2,0 dl/g und/oder eine Wasserabsorptionsrate von 1,5% oder weniger, gemessen bezüglich einer Probe mit einer Größe von 100 mm × 100 mm × 3 mm nach einer Behandlung der Probe bei 50°C und 90% RH für 48 Stunden aufweist.

2. Polyamidesterharz nach Anspruch 1, wobei die durch Formel 1 dargestellte Wiederholungseinheit von einer durch Formel 2 dargestellten zyklischen Esterverbindung oder einer durch Formel 3 dargestellten Hydroxycarbonsäure gewonnen wird:

[Formel 2]

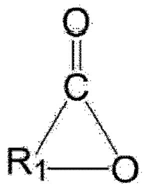

[Formel 3]

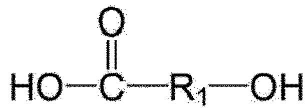

wobei $R_1$ wie in Formel 1 definiert ist.

3. Polyamidesterharz nach Anspruch 1 oder 2, wobei das Diamin mindestens ein aliphatisches $C_4$- bis $C_{20}$-Diamin aufweist.

4. Polyamidesterharz nach einem der vorangehenden Ansprüche, wobei die durch Formel 1 dargestellte Wiederholungseinheit in einer Menge von 1 oder mehr Molanteilen bis 30 Molanteilen bezogen auf 100 Molanteilen der von der Dicarbonsäure gewonnenen Wiederholungseinheit und der vom Diamin gewonnenen Wiederholungseinheit enthalten ist, und wobei ein Molverhältnis der von der Dicarbonsäure gewonnenen Wiederholungseinheit zu der vom Diamin gewonnenen Wiederholungseinheit (Dicarbonsäure/Diamin) im Bereich von 0,95 bis 1,15 liegt.

5. Polyamidesterharz nach einem der vorangehenden Ansprüche, wobei das Polyamidesterharz einen durch Gleichung 1 dargestellten Farbabstand ($\Delta$E) von 4 oder mehr bis 7 aufweist:

[Gleichung 1]

$$\text{Farbabstand } (\Delta E) = \sqrt{(\Delta L^*)^2 + (\Delta a^*)^2 + (\Delta b^*)^2}$$

wobei $\Delta L^*$ eine Differenz zwischen den L*-Werten vor und nach einem Scorch-Test, $\Delta a^*$ eine Differenz zwischen den a*-Werten vor und nach dem Scorch-Test, und $\Delta b^*$ eine Dififerenz zwischen den b*-Werten vor und nach dem Scorch-Test bezeichnen.

6. Verfahren zum Herstellen eines Polyamidesterharzes mit den Schritten:

Polymerisieren einer Monomermischung, die eine Dicarbonsäure, ein Diamin und eine durch Formel 2 dargestellte zyklische Esterverbindung oder eine durch Formel 3 dargestellte Hydroxycarbonsäureverbindung aufweist,
wobei das Polyamidesterharz eine Schmelztemperatur (Tm) von 280°C oder mehr aufweist;

[Formel 2]

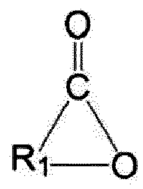

[Formel 3]

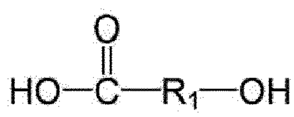

wobei $R_1$ eine lineare, verzweigte oder zyklische $C_3$- bis $C_{12}$-Alkylengruppe ist.

7. Verfahren nach Anspruch 6, mit den Schritten:

Herstellen eines Prepolymers durch Polymerisation des Monomergemischs; und
Ausführen einer Festphasenpolymerisation des Prepolymers.

8. Verfahren nach Anspruch 6 oder 7, wobei die Festphasenpolymerisation durch Erwärmen des Prepolymers auf eine Temperatur von 150°C oder mehr bis 280°C ausgeführt wird.

9. Formartikel, der aus dem Polyamidesterharz nach einem der Ansprüche 1 bis 5 ausgebildet ist.

## Revendications

1. Résine d'ester de polyamide comprenant :

une unité de répétition dérivée d'un acide dicarboxylique, qui comprend 50% en moles ou plus d'un acide dicarboxylique aromatique en $C_8$ à $C_{20}$ et un acide dicarboxylique aliphatique en $C_6$ à $C_{20}$, dans laquelle la teneur en acide dicarboxylique aliphatique en $C_6$ à $C_{20}$ est de 50% en moles ou moins ;
une unité de répétition dérivée d'une diamine ; et
une unité de répétition représentée par la Formule 1,

[Formule 1]

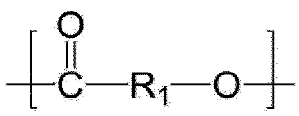

dans laquelle $R_1$ représente un groupe alkylène linéaire, ramifié ou cyclique en $C_3$ à $C_{12}$;
dans laquelle la résine d'ester de polyamide a une température de fusion (Tm) de 280°C ou plus et dans laquelle la résine d'ester de polyamide a une température de cristallisation (Tc) de 250°C ou plus à 290°C, et/ou une température de transition vitreuse (Tg) de 80°C ou plus à 120°C, et/ou une viscosité intrinsèque de 0,5 dL/g ou plus à 2,0 dL/g, et/ou un taux d'absorption d'eau de 1,5% ou moins tel que mesuré sur un échantillon ayant une taille de 100 mm × 100 mm × 3 mm après traitement de l'échantillon à 50°C et 90% HR pendant 48 heures.

2. Résine d'ester de polyamide selon la revendication 1, dans laquelle l'unité de répétition représentée par la Formule 1 est dérivée d'un composé ester cyclique représenté par la Formule 2 ou d'un composé acide hydroxycarboxylique représenté par la Formule 3 :

[Formule 2]

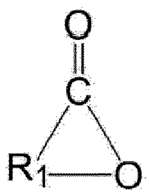

[Formule 3]

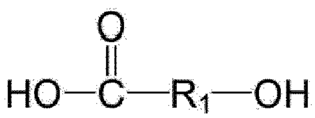

dans laquelle $R_1$ est défini comme dans la Formule 1.

3. Résine d'ester de polyamide selon l'une quelconque des revendications précédentes, dans laquelle la diamine comprend au moins une diamine aliphatique en $C_4$ à $C_{20}$.

**4.** Résine d'ester de polyamide selon l'une quelconque des revendications précédentes, dans laquelle l'unité de répétition représentée par la Formule 1 est présente en une quantité de 1 partie ou plus en mole à 30 parties en mole sur la base de 100 parties en mole de l'unité de répétition dérivée de l'acide dicarboxylique et l'unité de répétition dérivée de la diamine, et un rapport molaire de l'unité de répétition dérivée de l'acide dicarboxylique sur l'unité de répétition dérivée de la diamine (acide dicarboxylique/diamine) va de 0,95 ou plus à 1,15.

**5.** Résine d'ester de polyamide selon l'une quelconque des revendications précédentes, dans laquelle la résine d'ester de polyamide a un changement de couleur ($\Delta$E) de 4 ou plus à 7, comme représenté par l'Equation 1 :

[Equation 1]

$$\text{Changement de couleur } (\Delta E) = \sqrt{(\Delta L*)^2 + (\Delta a*)^2 + (\Delta b*)^2}$$

dans laquelle $\Delta$L* est une différence de L* entre avant et après un test de brûlure, $\Delta$a* est une différence de a* entre avant et après le test de brûlure, et $\Delta$b* est une différence de b* entre avant et après le test de brûlure.

**6.** Procédé de préparation d'une résine d'ester de polyamide, comprenant de :

polymériser un mélange de monomères comprenant un acide dicarboxylique, une diamine, et un composé ester cyclique représenté par la Formule 2 ou un composé acide hydroxycarboxylique représenté par la Formule 3,
dans lequel la résine d'ester de polyamide a une température de fusion (Tm) de 280°C ou plus.

[Formule 2]

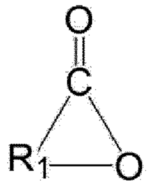

[Formule 3]

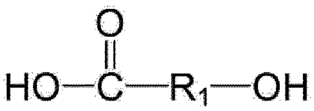

dans lequel $R_1$ représente un groupe alkylène linéaire, ramifié ou cyclique en $C_3$ à $C_{12}$.

**7.** Procédé selon la revendication 6, comprenant de :

préparer un prépolymère par polymérisation du mélange de monomères; et
effectuer une polymérisation à l'état solide du prépolymère.

**8.** Procédé selon la revendication 6 ou la revendication 7, dans lequel la polymérisation à l'état solide est effectuée en chauffant le prépolymère à une température de 150°C ou plus à 280°C.

**9.** Article moulé formé à partir de la résine d'ester de polyamide selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H04306229 B
- JP H05156010 B
- JP H01167329 B